# EUROPÄISCHE PATENTSCHRIFT

(11) **EP 1 234 863 B1**
(45) Veröffentlichungstag und Bekanntmachung des Hinweises auf die Patenterteilung: **25.10.2006**
(21) Anmeldenummer: 02002846.0
(22) Anmeldetag: 08.02.2002
(51) Int. Cl.: C09J 7/02, B26D 3/08, G09F 3/10

(54) **Verfahren zur Herstellung eines Abdeckmaterials mit Stanzformteilen**
Method of manufacturing a cover material with stamped parts
Procédé de fabrication d'un matériau de recouvrement comprenant des pièces découpées

(30) Priorität: 27.02.2001 DE 10109396
(43) Veröffentlichungstag der Anmeldung: 28.08.2002
(73) Patentinhaber: tesa AG, 20253 Hamburg (DE)
(72) Erfinder: Wieck, Andreas, 25469 Halstenbek (DE); Storbeck, Reinhard, Dr., 22457 Hamburg (DE)

(56) Entgegenhaltungen:
- CA-A- 1 320 179
- DE-B- 1 052 611
- US-A- 5 250 336

## Beschreibung

Die Erfindung betrifft ein Abdeckmaterial mit Stanzformteilen erhältlich in einem Konfektionierprozeß zur Herstellung von ein- oder doppelseitig klebenden Stanzformteilen, wobei auf das Abdeckmaterial ein ein- oder doppelseitiges Klebeband aufgelegt ist, aus dem insbesondere im Anstanzprozeß (kiss-cut-Prozeß) Stanzformteile mittels Stanzwerkzeugen ausgestanzt werden, sowie die Verwendung eines Kunststoffträgers für ein solches Abdeckmaterial.

Teile, welche durch ein doppelseitiges Klebeband befestigt werden sollen (zum Beispiel elektronische Bauteile oder Dichtungen in Mobilfunktelefonen) erfordern je nach Anwendungsfall den Einsatz doppelseitig klebender Stanzteile. Diese Stanzteile müssen vorab in einem Stanzprozess, insbesondere im sogenannten Anstanzprozeß, in die erforderliche Form konfektioniert werden, wobei zuvor das Abdecken des zur Herstellung der Stanzteile vorliegenden Klebebands mit einem antiadhäsiv ausgerüsteten Material erforderlich ist. Zur Herstellung von Stanzformteilen, die aus dem Klebeband im einzelnen oder durch Zukaschieren aus dem Verbund mit besonders harten unnachgiebigen Materialien wie zum Beispiel Polyester bestehen, wird vorzugsweise eine ebenso harte unnachgiebige Trägerbahn als Abdeckung verwendet. Damit wird verhindert, daß die Trägerbahn dem sich aufbauenden Druck der Stanzmesser beim Durchdringen von harten Stanzformteilen nachgeben kann und die Stanzmesser zu stark in die Trägerbahn eindringen.

Das Anstanz-Verfahren ist dadurch ausgezeichnet, daß beim Stanzen das antiadhäsiv ausgerüstete Material nicht oder nur unwesentlich verletzt beziehungsweise angestanzt wird.

Für den Spendeprozeß der Stanzformteile werden üblicherweise als harte Trägerbahn je nach Steuerungsverfahren transparente oder lichtundurchlässige Polyesterfolien eingesetzt. Bei Einsatz von lichtundurchlässigen Potyesterträgerbahnen kann die Steuerung durch optische Erkennungssysteme wie zum Beispiel Lichtschrankenvorschubsysteme in Verbindung mit lochartigen Einkerbungen im Kantenbereich der Trägerbahn erreicht werden.
Die Lichtundurchlässigkeit der Polyesterfolie wird üblicherweise durch homogene Einarbeitung von Pigmentfüllstoffen wie zum Beispiel Ruß oder Titandioxyd in das Polyester erreicht. Generell gelangen je nach Erkennungsverfahren der Stanzformteile auf der Trägerbahn im Steuerungsprozeß transparente weiß oder schwarz eingefärbte Polyesterträgerbahnen zum Einsatz, wobei die mit dem Weißpigment Titandioxyd gefüllte Trägerbahn den Nachteil hat, daß die Stanzmesser einer starken Abrasion unterliegen, was zu einem häufigeren kostenintensiven Nacharbeiten und Wechseln der Stanzmesser führt. Demgegenüber können schwarz eingefärbte Polyesterträger aufgrund des Rußanteils die elektrischen Leitfähigkeitseigenschaften der Trägerbahn verändern und Störungen der Erkennungssysteme verursachen.

Aufgabe der Erfindung ist es, ein Verfahren zum Konfektionieren und Spenden von klebenden Stanzformteilenaus lichtdurchlässigen Kunststoffträgerbahnen zur Verfügung zu stellen, bei welchem eine Abrasion der Stanzmesser oder Veränderungen des elektrischen Leitverhaltens der Trägerbahn verhindert wird.

Gelöst wird die Aufgabe durch ein Verfahren, wie es im Hauptanspruch dargelegt ist.

Der Hauptanspruch betrifft entsprechend ein Verfahren zur Herstellung von ein- oder doppelseitigen Stanzformteilen, wobei auf ein Abdeckmaterial ein ein- oder doppelseitiges Klebeband aufgelegt ist. aus dem Stanzformteile mittels Stanzwerkzeugen ausgestanzt werden, wobei das Abdeckmaterial eine Trägerbahn in Form eines Kunststoffträgers aufweist, welcher im wesentlichen eine obere und eine untere Seite besitzt, wobei auf der oberen und/oder unteren Seite der Trägerbahn zumindest teilflächig eine Farbschicht aufgebracht ist, die zur Steuerung optischer Erkennungssysteme während des Stanzprozesses dient, wobei als wässrige Farbstoffe kationische Farbsysteme und/oder als lösemittelhaltige Farben solche auf Nitrocellulosebasis verwendet werden.

Bevorzugt wird das Ausstanzen in einem Anstanzprozess durchgeführt.

Dabei wird ein farbig mit einer Farbschicht zumindest teilflächig versehener Kunststoffträger als Trägerbahn in einem Abdeckmaterial für ein Klebeband verwendet.

Die Unteransprüche betreffen vorteilhafte Fortbildungen des Erfindungsgegenstands sowie besonders vorteilhafte Verwendungen eines solchen Kunststoffträgers.

Die Farbstoffe werden derart gewählt, daß sie keine schädigende Wirkung für das Stanzwerkzeug besitzen; insbesondere soll hier die Anwesenheit von Titandioxid als Pigmentfarbstoff ausgeschlossen werden.

Hervorragend für das Verfahren eingesetzt werden kann ein Abdeckmaterial mit Stanzformteilen, erhältlich in einem Konfektionierprozeß zur Herstellung von ein- oder doppelseitig klebenden Stanzformteilen, wobei auf das Abdeckmaterial ein ein- oder doppelseitiges Klebeband aufgelegt ist, aus dem insbesondere im Anstanzprozeß Stanzformteile ausgestanzt werden. Die Trägerbahn in dem Abdeckmaterial ist hierbei ein Kunststoffträger, welcher im wesentlichen eine obere und eine untere Seite aufweist, wobei auf der oberen und/oder auf der unteren Seite des Kunststoffträgers eine Farbschicht aufgebracht ist.

Durch die Aufbringung der Farbschicht wird gewährleistet, daß ein hinreichender optischer Kontrast besteht, der es erlaubt, optische Erkennungssysteme während des Stanzprozesses zu steuern.
Dabei wird im erfinderischen Sinne eine dunkle Trägerbahn oder eine teilflächig gefärbte (im Bereich der Steuersysteme) verwendet, die in bestimmten Bereichen, insbesondere an ihren Seitenrändern, mit Löchern, Einkerbungen oder dergleichen gekennzeichnet sind. Die Steuersysteme weisen insbesondere einen Lichtstrahl auf, welcher die Trägerbahn im Bereich der Kennzeichnungen abrastert. Durch den Kontrast zwischen dunklen (farbigen) Stellen und durchgängigen Stellen werden Steuerungsimpulse zur Durchführung von Spendevorgängen ausgelöst.

Für die Farbschicht werden als wäßrige Farbstoffe kationische Farbsysteme und als lösemittelhaltige Farben Farben auf Nitrocellulosebasis eingesetzt. Es können zum Beispiel mittels diesen Farbstoffen gefärbte Silikone verwendet werden.

Generell ist es für die Erfindung insbesondere von Vorteil, wenn die Farbschicht auf der Trägerbahn vollflächig aufgebracht ist. Im Sinne der Erfindung ist es aber auch möglich, nur eine teilweise Farbschicht aufzubringen, die nicht die gesamte Fläche der Trägerbahn bedeckt. Vorteilhaft ist es insbesondere, wenn die Trägerbahn nur an ihren Seitenrändern mit Farbe versehen ist, dabei dienen die Farbstreifen, welche mit Löchern versehen, eingekerbt oder dergleichen sind, als Steuerstreifen für das optische Erkennungssystem. Denkbar ist auch, eine Gitterbedruckung aufzubringen, welche insbesondere die Form der auszustanzenden Stanzlinge vorgibt.

Das Aufbringen der Farbschicht auf die Trägerbahn kann dabei durch Aufdrucken, Aufsprühen, Aufstreichen, im Flexodruck durch Rasterwalzenauftrag mit Rakeln, durch Abquetschen oder durch andere geeignete Verfahren geschehen.

Von besonderem Vorteil für die Erfindung ist die Verwendung eines Polyesterträgers als Trägerbahn. Polyester hat den Vorteil, daß es zum einen eine hinreichende Härte für den Stanzprozeß aufweist und zum anderen derart hergestellt werden kann, daß es nur geringe Schwankungen in der Dicke aufweist. Prinzipiell sind aber auch alle anderen als Trägerbahn bekannten Kunststoffe geeignet wie zum Beispiel Polystyrol, Polyamid oder Polyimid.

Sehr bevorzugt weist der Kunststoffträger im Falle der Verwendung von Polyester eine Dicke von 12 bis 150 µm, insbesondere von 25 bis 75 µm und ganz besonders von 36 bis 50 µm auf.

Vorteilhaft ist der Kunststoffträger auf der oberen und/oder auf der unteren Seite mit einer antiadhäsiven Beschichtung versehen. Für den bereits ein- oder zweiseitig mit einer Farbschicht versehenen Kunststoffträger kann die antiadhäsive Beschichtung auch auf der Farbschicht aufgetragen sein. Gerade wenn das Abdeckmaterial zur Eindeckung von einseitig klebenden Bändern vorgesehen ist, reicht es vollkommen, wenn das Abdeckmaterial auf der einzudeckenden Seite mit einer antiadhäsiven Beschichtung versehen ist.
Die einseitige adhäsive Beschichtung des Abdeckmaterials ist außerdem hinreichend, wenn das einseitig klebende Klebeband in Form eines Verbundes, beispielsweise aufgerollt, angeboten wird. Beidseitig klebende Bänder benötigen hingegen in der Regel eine beidseitige antiadhäsive Beschichtung.

Darüber hinaus stellt eine hervorragende Ausbildung der Erfindung die Tatsache dar, wenn als antiadhäsive Schichten zum Beispiel Silikon, Paraffin, Teflon oder Wachse verwendet werden. Dann können silikonfreie Trennschichten, zum Beispiel "non Silicone" von der Fa. Rexam, oder silikonarme Trennschichten, zum Beispiel "Lo ex" von der Fa. Rexam, eingesetzt werden.
Je nach Anwendungsfall des erfindungsgemäßen Trennmaterials ist es möglich, die antiadhäsiven Schichten auf beiden Seiten des Trennmaterials gleich oder unterschiedlich trennend auszugestalten, also auch auf beiden Seiten voneinander verschiedene Trenneigenschaften einzustellen (controlled release). '

Vorzugsweise wird lösemittelfrei beschichtetes Silikon eingesetzt.
Weiter vorzugsweise wird das lösemittelfrei beschichtete Silikon mit 0,5 bis 3,7 g/m², bevorzugt 1,0 bis 3,0 g/m², ganz besonders bevorzugt 1,5 bis 2,5 g/m², aufgetragen.

Aber auch lösemittelhaltige Systeme sind möglich, und zwar mit einer Auftragsmenge von insbesondere 0,3 bis 1 g/m².

Auf diese Weise ist gewährleistet, daß das Abdeckmaterial mit vollflächiger Beruckung
- gegenüber den Stanzmessern als abrasionsfreundliches Material wirkt
- als harte unnachgiebige Trägerbahn für harte Stanzformteile im Anstanzprozeß
- und für die Spendefunktion der Stanzformteile über die Erkennung durch optische Systeme in Verbindung mit Einkerbungen im Bahnkantenbereich
eingesetzt werden kann.

Es its sehr günstig, das Abdeckband auf der einen Seite mit einer Farbschicht und auf derselben Seite mit einer antiadhäsiven Beschichtung zu versehen. Dabei ist es vorteilhaft, wenn die Farbschicht auf der dem Klebeband zugewandten Seite des Abdeckmaterials liegt.

Besonders bevorzugt ist die Farbschicht mit 0,5 bis 20g/m², bevorzugt mit 4 bis 8 g/m², sehr bevorzugt mit 5 bis 7 g/m² auf den Kunststoffträger aufgetragen.

Die mit der Farbschicht versehene Ausführungsform weist gegenüber dem durchgefärbten Abdeckband eine Reihe von Vorteilen auf. So können kommerziell erhältliche Kunststoffbahnen ohne großen technischen Aufwand durch das Auftragen der Farbschicht nachgerüstet werden. Trägt man die Farbschicht vollflächig auf die dem Klebeband zugewandten Seite des Abdeckmaterials auf, so ist dies von besonderen Vorteil für die optische Steuerung der Erkennungssysteme im Stanzprozeß. Hierfür ist es weiterhin günstig, die Farbschicht einfarbig zu gestalten, insbesondere mit einer Farbe, welche einen besonders hohen optischen Kontrast zu den Löchern bzw. Einkerbungen herverruft.

Andererseits erlaubt die Beschichtung des Trägerbandes mit Farbe die Anbringung von Schriftzügen, Bildern oder anderen Darstellungen. Hierzu kann die Farbschicht mehrfarbig gestaltet werden oder nur auf Teilflächen des Bandes aufgetragen werden, wobei die Maßgabe verbleibt, daß die Steuerung der Erkennungssysteme gewährleistet bleibt. Derart kann das Abdeckband beispielsweise als Werbeträger dienen.

Bevorzugt wird das Abdeckmaterial mit doppelseitig klebenden Stanzformteilen zur Verklebung von Bauteilen in elektronischen Geräten wie Telefonen, insbesondere Mobiltelefonen verwendet.

Prinzipiell sind alle Arten von einseitig oder doppelseitig beschichteten Klebebändern als Basismaterial für die klebenden Stanzlinge geeignet, wobei als Trägermaterialbahn für diese zum Beispiel Papier, Vliese und Kunststoff unterschiedlichster Art möglich sind.

Weiter vorzugsweise weist das Klebeband eine Dicke von 20 bis 320 µm, bevorzugt 80 bis 260 µm, ganz besonders bevorzugt 130 bis 210 µm, auf.

Als Klebemassen für die Klebebänder können alle Haftklebemassen, wie sie zum Beispiel im SATAS, Handbook of Pressure Sensitive Adhesive Technology, Third Edition, erwähnt sind, eingesetzt werden. Insbesondere eignen sich Natur-/Synthese- kautschuk- und acrylatbasierende Klebemassen, die aus der Schmelze oder Lösung aufgetragen werden können.

Die erfindungsgemäß eingesetzte teil- oder vollflächig, ein- oder mehrfarbig bedruckte oder anderweitig mit Farbe versehene lichtundurchlässige Trägerbahn, die antiadhäsiv ausgerüstet ist, ist aufgrund der Verwendung nicht abrasiv wirkender Farbstoffe zur Herstellung der Lichtundurchlässigkeit für den Konfektionierprozess klebender Stanzformteile und den Lichtschrankengesteuerten Spendeprozeß der Formteile und hervorragend geeignet.

Schließlich umfaßt der Erfindungsgedanke die Verwendung eines Kunststoffträgers, insbesondere eines Polyesterträgers, als Trägerbahn in einem Abdeckmaterial für ein ein- oder doppelseitig klebend ausgerüstetes Klebeband, wobei der Kunststoffträger im wesentlichen eine obere und eine untere Seite aufweist und auf der oberen und/oder auf der unteren Seite mit einer vollflächigen Farbschicht versehen ist.

Im folgenden wird anhand einer Figur sowie eines Beispiels eine bevorzugte Ausführungsform des gesamten Produktaufbaues dargestellt, ohne in irgendeiner Form einschränkend wirken zu sollen. Das doppelseitig mit einer abhäsiven Beschichtung ausgerüstete Abdeckmaterial 3 ist mit den beidseitig klebenden oder bereits im Verbund mit kaschierten Kunststoffmaterialien hergestellten Stanzformteilen zu einer Rolle 1 gewickelt.
Nach Abwicklung des Produktes liegt das je nach Verfahren ein oder beidseitig klebende Produkt 2 auf der oberen Seite des antiadhäsiv ausgerüsteten Trennmaterials 3 und die Stanzformteile können über optische Erkennungssysteme und Markierungen im Bahnkantenbereich gespendet werden.

### Beispiel

Das mit dem Trennmaterial gemäß Ansprüchen ausgerüstete Klebeband kann im rotativen Stanzverfahren zu hochwertigen Stanzformteilen konfektioniert werden. Dabei wird das Klebeband zusammen mit dem Trennmaterial abgerollt und über eine Gegendruckwalze unterhalb des rotativen Stanzmessers einzeln oder bereits im Verbund mit zukaschierten Kunststoffmaterialien hindurchgeführt. In diesem Arbeitsgang werden gleichzeitig die für den späteren SpendeNorschubprozeß unter Verwendung von Lichtschrankenvorschubsystemen notwendigen Einkerbungen oder Löcher im Randbereich der Polyesterträgerbahn eingearbeitet. Je nach Stanzgeometrie werden dabei auf der Trennmaterialabdeckung Formteile erzeugt, die nach Abzug und Verwerfung des verbleibenden Gitternetzes wieder aufgewickelt werden. Im Fall der Herstellung und Aufrollung beidseitig klebender Stanzformteile ist ggf. die Kaschierung einer zweiten Abdeckung erforderlich.

Folgende Bestandteile werden für einen erfindungsgemäßen Polyesterträger sowie die Stanzteile eingesetzt:
- Trennmaterialabdeckung:: 50 µm Polyesterfolie
Einseitig mit einer grünen Bedruckung 6 g/m²
je Seite ca. 1,6 g/m² eines lösemittelfreien Silikonsystems
- Klebeband:: 48 µm starkes Klebeband mit einem PTE Träger

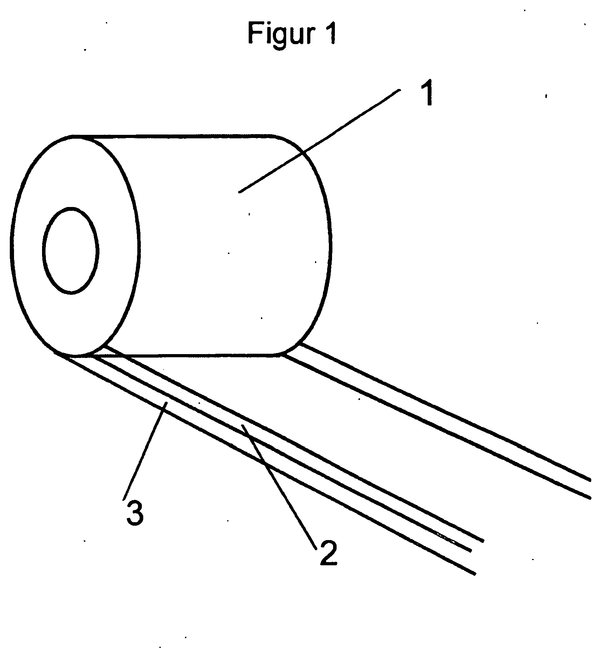

## Patentansprüche

1. Verfahren zur Herstellung von ein- oder doppelseitigen Stanzformteilen, wobei auf ein Abdeckmaterial ein ein- oder doppelseitiges Klebeband aufgelegt ist, aus dem Stanzformteile mittels Stanzwerkzeugen ausgestanzt werden, wobei das Abdeckmaterial eine Trägerbahn in Form eines Kunststoffträgers aufweist, welcher im wesentlichen eine obere und eine untere Seite besitzt, **dadurch gekennzeichnet, dass**
auf der oberen und/oder unteren Seite der Trägerbahn zumindest teilflächig eine Farbschicht aufgebracht ist, die zur Steuerung optischer Erkennungssysteme während des Stanzprozesses dient, wobei, als wässrige Farbstoffe kationische Farbsysteme und/oder als lösemittelhaltige Farben solche auf Nitrocellulosebasis verwendet werden.

2. Verfahren nach Anspruch 1, **dadurch gekennzeichnet, dass**
das Ausstanzen in einem Anstanzprozess durchgeführt wird.

3. Verfahren nach einem der Ansprüche 1 oder 2, **dadurch gekennzeichnet, dass**
für die Farbschicht mittels Farbstoffen gefärbte Silikone verwendet werden.

4. Verfahren nach einem der vorangehenden Ansprüche, **dadurch gekennzeichnet, dass**
der Kunststoffträger ein Träger aus Polyester, Polystyrol, Polyamid oder Polyimid ist.

5. Verfahren nach Anspruch 4, **dadurch gekennzeichnet, dass**
der Polyesterträger eine Dicke von 12 bis 150 µm, insbesondere von 25 bis 75 µm, ganz besonders von 36 bis 50 µm aufweist.

6. Verfahren nach zumindest einem der vorangehenden Ansprüche, **dadurch gekennzeichnet, dass**
auf der oberen und/oder auf der unteren Seite des Kunststoffträgers, gegebenenfalls auf der auf den Kunststoffträger aufgebrachten Farbstoffschicht, eine antiadhäsive Beschichtung aufgebracht ist.

7. Verfahren nach Anspruch 6, **dadurch gekennzeichnet, dass**
als antiadhäsive Beschichtung silikonfreie oder silikonarme Schichten oder Silikon, Paraffin, Teflon, Wachse eingesetzt sind.

8. Verfahren nach zumindest einem der Ansprüche 4 oder 5, **dadurch gekennzeichnet, dass**
auf der einen Seite des Abdeckmaterials eine Farbschicht und auf derselben Seite eine antiadhäsive Schicht vorliegt, wobei die Farbschicht insbesondere auf der dem Klebeband zugewandten Seite des Abdeckmaterials liegt.

9. Verfahren nach zumindest einem der vorangehenden Ansprüche, **dadurch gekennzeichnet, dass**
die Farbschicht mit 0,5 bis 20 g/m², bevorzugt mit 4 bis 8 g/m², sehr bevorzugt mit 5 bis 7 g/m² auf den Kunststoffträger aufgetragen ist.

## Claims

1. Process for producing single-sidedly or double-sidedly adhesive punched shaped parts, there being placed atop a protective material a single-sidedly or double-sidedly adhesive tape from which punched shaped parts are punched out by means of punching tools,
the protective material comprising a backing sheet in the form of a polymer backing possessing essentially a top and a bottom face, **characterized in that** there is applied at least subregionally to the top and/or bottom face of the backing sheet a color layer which serves to guide optical recognition systems during the punching process, use being made, as aqueous dyes, of cationic color systems and/or, as solventborne colors, of nitrocellulose-based colors.

2. Process according to claim 1, **characterized in that** the punching out is carried out by a kiss-cut process.

3. Process according to one of claims 1 and 2, **characterized in that** silicones colored by means of dyes are used for the color layer.

4. Process according to one of the preceding claims, **characterized in that**
the polymer backing is a backing of polyester, polystyrene, polyamide or polyimide.

5. Process according to claim 4, **characterized in that**
the polyester backing has a thickness of from 12 to 150 µm, in particular from 25 to 75 µm, very particularly from 36 to 50 µm.

6. Process according to at least one of the preceding claims, **characterized in that**
an antiadhesive coating is applied on the top and/or the bottom face of the polymer backing, where appropriate on the colorant layer applied to the polymer backing.

7. Process according to claim 6, **characterized in that**
silicone-free or low-silicone layers or silicone, paraffin, Teflon and/or waxes are used as antiadhesive coating.

8. Process according to at least one of claims 4 and 5, **characterized in that** a color layer is present on one side of the protective material and an antiadhesive layer on the same side, the color layer being present in particular on the side of the protective material facing the adhesive tape.

9. Process according to at least one of the preceding claims, **characterized in that**
the color layer is applied to the polymer backing at from 0.5 to 20 g/m², preferably from 4 to 8 g/m², very preferably from 5 to 7 g/m².

## Revendications

1. Procédé de production de pièces découpées simple ou double face, dans lequel est déposée sur un matériau de recouvrement une bande adhésive simple ou double face, dont on découpe des pièces découpées au moyen d'outils de découpe, le matériau de recouvrement présentant une bande de support sous la forme d'un support en matière synthétique, présentant essentiellement une face supérieure et une face inférieure, **caractérisé en ce que**, sur la face supérieure et / ou inférieure de la bande de support, est appliquée sur au moins une partie de la surface une couche de couleur servant à la commende de systèmes de reconnaissance optique pendant le processus de découpage, et où l'on utilise en tant que colorants aqueux des systèmes de couleur cationiques et / ou, en tant que colorants contenant du solvant, ceux à base de nitrocellulose.

2. Procédé suivant la revendication 1, **caractérisé en ce que** le découpage est entrepris par un procédé de découpage à effleurement.

3. Procédé suivant l'une quelconque des revendications 1 ou 2, **caractérisé en ce que** l'on utilise pour la couche de couleur des silicones teintés par des colorants.

4. Procédé suivant l'une quelconque des revendications qui précèdent, **caractérisé en ce que** le support en matière synthétique est un support en polyester, en polystyrène, en polyamide ou en polyimide.

5. Procédé suivant la revendication 4, **caractérisé en ce que** le support en polyester présente une épaisseur de 12 à 150 µm, en particulier de 25 à 75 µm, plus particulièrement de 36 à 50 µm.

6. Procédé suivant au moins l'une quelconque des revendications qui précèdent, **caractérisé en ce que**, sur la face supérieure et / ou inférieure du support en matière synthétique, éventuellement sur la couche de couleur appliquée sur le support en matière synthétique, est appliqué un revêtement antiadhésif.

7. Procédé suivant la revendication 6, **caractérisé en ce que** l'on met en oeuvre en tant que revêtement antiadhésif des couches exemptes de silicone ou pauvres en silicones, ou un silicone, une paraffine, du téflon, des cires.

8. Procédé suivant au moins l'une des revendications 4 ou 5, **caractérisé en ce que** sur une face du matériau de recouvrement, se trouve une couche de couleur et, sur cette même face, une couche antiadhésive, la couche de couleur se trouvant en particulier sur la face du matériau de recouvrement dirigée du côté de la bande adhésive.

9. Procédé selon au moins l'une quelconque des revendications qui précèdent, **caractérisé en ce que** la couche de couleur est appliquée à raison de 0,5 à 20 g/m², de préférence de 4 à 8 g/m², très préférablement de 5 à 7 g/m², sur le support en matière synthétique.
